(19) Europäisches Patentamt / European Patent Office / Office européen des brevets

(11) **EP 2 786 819 A1**

(12) # EUROPEAN PATENT APPLICATION
published in accordance with Art. 153(4) EPC

(43) Date of publication:
**08.10.2014 Bulletin 2014/41**

(21) Application number: **12852802.3**

(22) Date of filing: **29.08.2012**

(51) Int Cl.:
**B22F 9/04** (2006.01)   **B22F 1/00** (2006.01)
**H01G 9/052** (2006.01)

(86) International application number:
**PCT/JP2012/071761**

(87) International publication number:
**WO 2013/080617 (06.06.2013 Gazette 2013/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.11.2011 JP 2011259926**

(71) Applicant: **Showa Denko K.K.**
**Tokyo 105-8518 (JP)**

(72) Inventors:
• **NAITO, Kazumi**
  **Tokyo 105-8518 (JP)**
• **YABE, Shoji**
  **Tokyo 105-8518 (JP)**

(74) Representative: **Strehl Schübel-Hopf & Partner**
**Maximilianstrasse 54**
**80538 München (DE)**

(54) **METHOD FOR MANUFACTURING FINE TUNGSTEN POWDER**

(57)   The present invention provides a method for finely powdering tungsten powder, comprising electrolytically oxidizing tungsten powder while stirring in an aqueous mineral-acid solution to form an oxide film in the surface of the tungsten powder and removing the oxide film with an alkaline aqueous solution; a method for producing tungsten powder to obtain fine tungsten powder by a process including the above method for finely powdering; and a tungsten powder having an average particle size of 0.04 to 0.4 $\mu$m, in which the dMS value (product of an average particle size d ($\mu$m), true density M (g/cm$^3$) and BET specific surface area S (m$^2$/g)) is within the range of 6±0.4.

**EP 2 786 819 A1**

## Description

TECHNICAL FIELD

The present invention relates to a method for producing fine tungsten powder. Specifically, the present invention relates to a method for processing a tungsten powder into the one having a smaller particle size which is useful for use in an electrolytic capacitor; and a method for producing fine tungsten powder using the above method.

BACKGROUND ART

With the progress of small-size, high-speed and lightweight electronic devices such as cellular phones and personal computers, the capacitor used for these electronic devices is demanded to have a smaller size, a larger capacitance and a lower ESR (Equivalent Series Resistance).

As an example of such a capacitor, the electrolytic capacitor has been proposed, which capacitor is produced by anodically oxidizing an anode body for capacitors comprising a sintered body made of a valve-acting metal powder which can be anodized such as tantalum to form a dielectric layer made of the oxide of the metal in the surface of the anode body.

The electrolytic capacitor using tungsten as a valve-acting metal and employing the sintered body of the tungsten powder as an anode body can attain a larger capacitance compared to the electrolytic capacitor obtained with the same formation voltage by employing the anode body of the same volume using the tantalum powder having the same particle size. However, the electrolytic capacitor having the sintered body of the tungsten powder has been unpracticed as an electrolytic capacitor due to the large leakage current (LC). In order to solve this issue, a capacitor using the alloy of tungsten and other metals has been studied and has achieved some improvement in the leakage current, but it was not enough (JP-A-2004-349658 (U.S. 6,876,083 B2); Patent Document 1).

Patent Document 2 (JP-A-2003-272959) discloses a capacitor using an electrode of a tungsten foil having formed thereon a dielectric layer selected from $WO_3$, $W_2N$ and $WN_2$, but the capacitor is not to solve the above-mentioned leakage current problem.

Also, Patent Document 3 (WO 2004/055843 publication (U.S. 7,154,743 B2)) discloses an electrolytic capacitor using an anode body selected from tantalum, niobium, titanium and tungsten, but it does not describe a specific example using tungsten in the specification.

In an anode body for an electrolytic capacitor which is obtained by molding tungsten powder and sintering it, the smaller particle size enables the production of an anode body having a larger capacitance, if the volume of the anode body is the same. Therefore the smaller size of the raw material tungsten powder is more preferable but the average particle size of a commercially-available tungsten powder is 0.5 to 20 $\mu$m.

Tungsten powder can be manufactured by treating oxide, halide or ammonium salt of tungsten as a raw material with a reducing agent such as hydrogen. However, increase in the rate of reduction may give rise to a problem of generating a composite oxide and the like. Therefore, it is necessary to decrease the rate of reduction in order to produce finer powder, and it leads to low the production efficiency and high cost. Also, it is necessary to produce the fine powder by a complicated process equipped with an expensive controlling device. Furthermore, there has been a problem of handling a material having a wide explosibility range such as hydrogen gas.

PRIOR ART

Patent Document

Patent Document 1: JP-A-2004-349658
Patent Document 2: JP-A-2003-272959
Patent Document 3: WO 2004/055843

DISCLOSURE OF THE INVENTION

Problems to be Solved by the Invention

An object of the present invention is to provide a method for processing tungsten powder to obtain tungsten powder having a smaller particle size as a material of a capacitor comprising tungsten as an anode (hereinafter referred to as a tungsten capacitor), and a method for producing fine tungsten powder using the method.

Means to Solve the Problem

As a result of intensive study to solve the above-mentioned problem, the present inventors have found that a fine tungsten powder which is more suitable for a capacitor can be obtained by electrolytic oxidization of the surface of a tungsten powder which is currently available and have accomplished the present invention.

That is, the present invention relates to a method for finely powdering tungsten powder and a method for producing tungsten powder as below.

[1] A method for finely powdering tungsten powder, comprising electrolytically oxidizing tungsten powder while stirring in an electrolytic solution to form an oxide film in the particle surface of the tungsten powder and removing the oxide film with an alkaline aqueous solution.

[2] The method for finely powdering tungsten powder as described in [1] above, wherein the removal of the oxide film with an alkaline aqueous solution includes mechanically removing the reaction product in the particle surface of the tungsten powder.

[3] The method for finely powdering tungsten powder as described in [1] or [2] above, wherein the electrolytic solution is an aqueous solution of mineral acid.

[4] The method for finely powdering tungsten powder as described in [3] above, wherein the mineral acid is selected from phosphoric acid, nitric acid, hydrochloric acid, boric acid and sulfuric acid.

[5] The method for finely powdering tungsten powder as described in [4] above, wherein the mineral acid is phosphoric acid or boric acid.

[6] A method for finely powdering tungsten powder, comprising dispersing tungsten powder in an aqueous solution containing an oxidizing agent to form an oxide film in the surface of the tungsten powder, removing the oxide film with an alkaline aqueous solution, followed by the method described in any one of [1] to [5] above.

[7] A method for producing fine tungsten powder, comprising obtaining tungsten powder having an average particle size of 0.04 to 0.4 $\mu$m by a process including the method described in any one of [1] to [6] above.

[8] A method for producing fine tungsten powder, comprising obtaining tungsten powder, in which the product of an average particle size ($\mu$m), true density (g/cm$^3$) and BET specific surface area (m$^2$/g) is within the range of $6\pm0.4$, by a process including the method described in any one of [1] to [6] above. [9] A tungsten powder having an average particle size of 0.04 to 0.4 $\mu$m, in which the dMS value (product of an average particle size d ($\mu$m), true density M (g/cm$^3$) and BET specific surface area S (m$^2$/g)) is within the range of $6\pm0.4$.

EFFECTS OF THE INVENTION

According to the present invention, using a currently available tungsten powder or a tungsten powder which can be produced by a known method, a tungsten powder having a small particle size and a substantially spherical shape which is suitable for an electrolytic capacitor can be obtained.

Since the tungsten powder obtained by the present invention have a small particle size, a capacitor obtained thereof has a large capacitance. Also, the tungsten powder has a high flowability due to the more spherical particle shape. Accordingly, the powder can be handled more easily in the process of producing granulate powder and the like.

MODE FOR CARRYING OUT THE INVENTION

[Raw material tungsten powder]

The average particle size of the raw material tungsten powder to be finely powdered in the present invention is preferably within the range of 0.1 to 10 $\mu$m.

A raw material tungsten powder can be obtained by , in addition to using a commercially-available product, manufacturing by a known method. For example, it can be obtained by manufacturing by appropriately selecting from a method of crushing tungsten trioxide powder under hydrogen atmosphere; a method of reducing tungsten acid or tungsten halide with hydrogen or sodium and the like. Also, a tungsten powder may be obtained by reducing the tungsten-containing mineral directly or through several steps and by selecting reducing conditions.

However, since it is difficult to obtain a raw material tungsten powder having a small particle size by these methods, a tungsten power treated by chemical oxidization in advance as mentioned below or a fine particle tungsten powder obtained according to the method of the present invention may be used as a raw material tungsten powder. Using these tungsten powers having been finely-powdered as a raw material, a tungsten powder having an even smaller particle size can be obtained. Thus, a tungsten powder having an average particle size of, for example, 0.04 $\mu$m or less can be obtained by repeatedly applying the method of the present invention.

However, in the case of forming a dielectric layer by anode oxidation, there is a lower limit of the particle size of the powder which can be suitably used for a capacitor. The lower limit of the particle size of the tungsten powder used for a capacitor is twice the thickness of the dielectric layer to be formed. For example, when the rated voltage is 1.6 V, the lower limit of the particle size is to be 0.04 $\mu$m. If the particle size is smaller than the lower limit, a conductive portion of the tungsten is not left sufficiently when performing anodic oxidation and it becomes difficult to construct an anode of an electrolytic capacitor.

Specifically, when used for a high capacitance capacitor having low rated voltage, the particle size of the tungsten powder is preferably 0.04 to 0.4 $\mu$m, more preferably 0.08 to 0.2 $\mu$m.

The raw material tungsten powder used in the method of the present invention may contain impurities within a range which does not affect the capacitor properties or may be processed to contain elements such as silicon, nitrogen, carbon, boron, phosphorus and oxygen in order to improve the capacitor properties. However, it is preferable that the particle surface treatment such as silicidation, nitridation, carbonization or boronization to be described later is conducted in a process later than applying the present invention.

In the present invention, a finely powdered tungsten powder is obtained by oxidizing the surface of particles of a raw material tungsten powder and removing the oxide film in the surface.

Oxidization of the particle surface of a tungsten powder can be performed either by chemical oxidization or electrolytic oxidization, and a method of fine powdering using electrolytic oxidization (referred to as electrolytic oxidization method hereinafter) can be operated more easily than a method of fine powdering using chemical oxidization, because generation amount of the oxide film can be controlled only by adjusting an applied voltage during the electrolytic oxidization. Accordingly, the electorlytic oxidization method can be preferably applied to production of a finer tungsten powder in which generation amount of the oxide film needs to be controlled more precisely.

Fine powdering of tungsten powder may be performed only by the electrolytic oxidization method. In the case of fine powdering of relatively large particles (for example, average particle size of 1 $\mu$m or more), tungsten powder may be pre-treated by chemical oxidization for fine powdering to some extent (for example, to average particle size of 0.5 $\mu$m or less) before applying the electrolytic oxidization method, and the applied voltage at the time of electrolytic oxidization can be reduced, which makes the operation easier.

(1) Electrolytic oxidization method

Oxidization of surface of tungsten powder particle:

As an electrolyte, an electrolyte solution such as an aqueous solution of mineral acid and salt thereof can be used, and aquueous solution of mineral acid is preferable because washing after oxidization is easy. Examples of mineral acid include phosphoric acid, nitric acid, hydrochloric acid, sulfuric acid and boric acid, and phosphoric acid or boric acid are preferable from the viewpoint that an oxide film having defects is obtained relatively easily, and the oxide film is easy to be removed with alkali aqueous solution later. Preferable concentration of the mineral acid aqueous solution is 0.1 to 5 mass%. If the concentration increases, cleaning of tungsten powder in the subsequent step becomes complicated.

The electrolytic oxidization is, for example, conducted as below. A material tungsten powder is put in a metal container containing an electrolyte while stirring, a predetermined voltage is applied between a metal stirring stick as an anode and the container as a cathode, and the tungsten powder is oxidized by applying a current at a temperature preferably from room temperature to the boiling point of the aqueous solution, more preferably 30 °C to 80 °C for preferably 10 minutes to 100 hours and more preferably 1 to 10 hours. A solvent component is supplied in the amount corresponding to the amount lost by evaporation, as needed.

The applied voltage may be set depending on the desired degree of fine powdering. Higher applied voltage leads to an increased amount of oxide film which results in smaller particle size. Specific voltage can be determined by a preliminary experiment. However, it takes time for electrolytic oxidization under high voltage, and preferable applied voltage may be set at 100V or less, and more preferably 50V or less, and the operation of fine powdering may be repeated, if necessary.

After the electrolytic oxidization is finished, the operation of removing the liquid by decantation and the like is repeated, and the tungsten powder is washed with a solvent such as water. The color of the tungsten in this state changes from black to yellowsh blue.

Removal of the oxide film:

The oxide film of the tungsten powder obtained as mentioned above, in which the surface is oxidized, is subjected to treatment with an alkaline aqueous solution and removed at least chemically. Preferably, using a device such as a homogenizer which is capable of vigorous stirring, the above-mentioned stirring is conducted while mechanically removing the product generated in the surface of tungsten particles as well.

As an alkaline solution, for example, sodium hydroxide aqueous solution, potassium hydroxide aqueous solution, ammonia water and the like can be used, and sodium hydroxide aqueous solution and potassium hydroxide aqueous solution are preferable.

Specifically, an alkaline aqueous solution is added to a tungsten powder in which the surface is oxidized. The solution is allowed to stand after stirring. After removing the solution by decantation, a series of operations of feeding a solvent such as water into the tungsten powder, stirring the resultant solution, allowing it to stand and subjecting it to decantation is repeated several times. By these operations, the color of the tungsten powder becomes black, and the oxide formed in the surface of tungsten particles is removed. Subsequently, the solution is dried in a vacuum dryer under reduced pressure (e.g. with the reduced pressue reduced of $10^4$ to $10^2$ Pa at the temperature of 50 to 180 °C) and cooled to room temperature. Then, by gradually introducing air into the dryer so that ignition may not occur and taking out the powder into the air, a tungsten powder having a smaller particle size than that of the raw material tungsten powder can be obtained.

(2) Chemical oxidization method

In the chemical oxidization carried out as a pretreatment, if desired, a raw tungsten powder is dispersed in an aqueous solution of oxidant by stirring and the like and retained for a predetermined time to oxidize the surface of the tungsten powder. A device such as a homogenizer which is capable of vigorous stirring is preferably used in order to keep a good dispersion state and make the surface of the tungsten powder oxidized rapidly. Further, oxidization proceeds at a faster pace at a high temperature.

Examples of the oxidant include a manganese (VII) compound such as permanganate; a chrome (VI) compound such as chromium trioxide, chromate and dichromate; a halogen acid compound such as perchloric acid, chlorous acid, hypochlorous acid and salt thereof; peroxide such as hydrogen peroxide, diethyl peroxide, sodium peroxide and lithium peroxide; peroxoacid such as peracetic acid and persulfate and salt thereof. Particularly preferable are hydrogen peroxide and ammonium persulfate, due to its handleability, stability as an oxidant and high solubility to water.

Concentration of the oxidant in an aqueous solution is within a range of about 1 % to a saturated solubility of the oxidant. Concentration of the oxidant can be appropriately determined by a preliminary experiment.

The time period for oxidization is one hour to 1,000 hours and preferably one hour to 100 hours. Oxidization temperature is from room temperature to the boiling point of the solvent and preferably 50 °C to the boiling point of the solution.

After oxidization reaction, tungsten powder is taken out from the oxidization reaction solution by decantation and the like, and a series of operations of feeding the tungsten powder into a solvent, stirring the resultant solution, allowing it to stand and subjecting it to decantation is repeated for washing the tungsten powder. The color of the tungsten at this point changes from black of the raw material to yellowish blue, and it can be visually confirmed that the surface of the tungsten powder is oxidized.

Regarding a solvent used in each step of the present invention, not only water but also a mixed aqueous solution of water and water-soluble organic solvent (e.g. ethanol and methanol) can be selected from the viewpoint of dispersibility of the powder and time required for decatation.

Removal of oxide film of the tungsten powder in which the surface is oxidized is conducted in a similar manner to the removal of the oxide film in the electrolytic oxidization method.

According to the method of the present invention, almost spherical tungsten particles can be obtained unless the raw material tungsten powder particles have a shape having especially high anisotropy. The fact that the particle shape is spherical can be confirmed by that the average particle diameter (d) ($\mu$m), true density (M) (g/cm$^3$) and BET specific surface area (S) (m$^2$/g) of the obtained tungsten powder satisfy the following formula.

$$d = 6/(M \times S) \qquad (1)$$

That is, it can be said that if the product (dxSxM; abbreviated as dSM) of the average particle diameter (d) ($\mu$m), true density (M) (g/cm$^3$) and BET specific surface area (S) (m$^2$/g) of the obtained tungsten powder is near to 6, the obtained tungsten powder particles have a almost-spherical shape. The dMS value of the tungsten powder obtained by the present invention is generally within the range of 6$\pm$0.4. Furthermore, by using the tungsten powder obtained by applying the method of the present invention as a raw material powder, it is also possible to obtain a tungsten powder composed of particles with higher degree of sphericity.

Since the dielectric layer formed in the surface of an almost-sphere particle has a substantially constant curvature and has no highly-curved portion with a small curvature in which stress tends to be concentrated, it undergoes little degradation. As a result, a capacitor having better LC characteristics can be obtained.

The tungsten powder produced by the method of the present invention may be directly sintered to be made into a sintered body, or may be granulated into granules about the size of 10 to 300 $\mu$m to be sintered and made into a sintered body. The granulated tungsten powder is easier to handle and to keep the ESR as low as possible.

Furthermore, the tungsten powder produced by the method of the present invention may be subjected to silicidation, nitridation, carbonization or boronization treatment to be made into a tungsten powder containing at least one of tungsten silicide, tungsten nitride, tungsten carbide and tungsten boride in a part of the surface of the tungsten particles. These treatments may be conducted when the tungsten powder has become a granulated powder or a sintered body. An electrolytic capacitor is fabricated comprising the sintered body as one electrode (anode), a counter electrode (cathode) and a dielectric body interposed therebetween.

EXAMPLES

The present invention is described below by referring to Examples and Comparative Examples, but the present invention is not limited thereto.

In the present invention, the particle diameter, specific surface area and true density were measured by the methods described below.

The particle diameter was measured by using HRA9320-X100 manufactured by Microtrack Inc. and the particle size distribution was measured by the laser diffraction scattering method. A particle diameter value ($D_{50}$; $\mu$m) corresponding to cumulative volume % of 50 volume % was designated as the average particle size (d). The diameter of the secondary particles is to be measured by this method. However, since the tungsten powder generally has good dispersibility, the measurement results near to the primary powder particle diameter can be obtained. Therefore, the measurement results can be substantially regarded as a primary particle diameter and applied to the above-described formula (1) to judge the particle shape.

The specific surface area (S; m$^2$/g) was measured by the BET method by using NOVA2000E (manufactured by SYSMEX Corp.) The true density (M; g/cm$^3$) was measured by a picnometer method (20°C).

Example 1:

200 g of tungsten powder having an average particle diameter of 1 μm obtained by reducing ammonium tungstate with hydrogen was put in 500 ml of distilled water in which 5 mass% of ammonium persulfate was dissolved and stirred at 50°C for 24 hours using homogenizer NS-51 manufactured by MICROTEC Co., Ltd. An amount of water lost through evaporation was successively added all the period. After allowing the liquid to stand at room temperature for 17 hours to sedimentate the powder, the liquid was removed by decantation. After adding another 200 ml of distilled water, the liquid was stirred by a homogenizer for five minutes and allowed to stand for several hours, and the liquid was removed by decantation. The series of operations of feeding distilled water, stirring, allowing the water to stand, and decantation was repeated four times. The tungsten powder at this point underwent a change in color to yellowish blue, which revealed that the surface of the tungsten powder was oxidized. Subsequently, 100 ml of a 5 mass% sodium hydroxide aqueous solution was added to the powder and stirred by a homogenizer for one hour. As described above, after allowing the liquid to stand and removing the liquid by decantation, the series of operations of feeding distilled water, stirring, allowing the liquid to stand, and decantation was repeated four times. The tungsten powder at this point was black and the oxide formed in the particle surface was removed. The produced powder had an average particle diameter of 0.5 μm.

Next, a tungsten powder containing water after decantation (100g for the powder itself) was moved to a separately prepared container made of stainless steel, and 300 ml of 1 mass% phosphoric acid aqueous solution was fed as an electrolytic solution. A stirring stick made of stainless steel (four 4 cm-long blades made of stainless steel are set in the lower part of the stick, at an angle of 90° to each other) is placed in the electrolytic solution from the upper part of the container, and electrolytic oxidization was conducted by applying a voltage of 20 V between the stirring stick as an anode and the container as a cathode at 50 °C for five hours while stirring the solution at a rotation speed of 100 rpm. An amount of water lost through evaporation was sucessively added all the period. After allowing the liquid to stand at room temperature for 40 hours to sedimentate the powder, the liquid was removed by decantation. After adding another 200 ml of distilled water, the liquid was stirred by the stirring stick for 20 minutes and allowed to stand for 20 hours, and the liquid was removed by decantation. The series of operations of feeding distilled water, stirring, allowing the water to stand, and decantation was repeated four times. The tungsten powder at this point underwent a change in color to yellowish blue, which revealed that the surface of the tungsten powder was oxidized.

Subsequently, 100 ml of a 5 mass% sodium hydroxide aqueous solution was added to the powder and stirred by the stirring stick for one hour. As described above, after allowing the liquid to stand and removing the liquid by decantation, the series of operations of feeding distilled water, stirring, allowing the liquid to stand, and decantation was repeated four times. The tungsten powder at this point was black and the oxide formed on the particle surface was removed. Subsequently, a part of the tungsten powders is moved to a vacuum dryer and dried under reduced pressure at the temperature of 50 °C, and cooled to room temperature. Then, air was introduced gradually into the dryer so that ignition may not occur, and the powder was taken out into the air. The produced powder had an average particle diameter (d) of 0.2 μm, specific surface area (S) of 1.5 m$^2$/g and true density (M) of 19.3. The product of the average particle diameter, specific surface area and true density of the obtained tungsten powder (dMS) was 5.8.

Example 2:

The electrolytic solution used in Example 1 was changed from 300 ml of 1 mass% phosphoric acid aqueous solution to a mixed solution of 100 ml of 1.5 mass% boric acid methanol and 350 ml of water. Decantation liquid was changed to a mixed solution of methanol and water in the same proportion as above. Also, an amount of methanol lost through evaporation was successively added all the period. A tungsten powder was obtained in a similar manner as in Example 1 except the above. The produced powder had an average particle diameter (d) of 0.16 μm, specific surface area (S) of 2.0 m$^2$/g and true density (M) of 19.3. The product of the average particle diameter, specific surface area and true density of the obtained tungsten powder (dMS) was 6.2. It was confirmed that the particles of the powder obtained both in Examples 1 and 2 were almost spherical because the dMS value was within the range of 6±0.2.

**Claims**

1. A method for finely powdering tungsten powder, comprising electrolytically oxidizing tungsten powder while stirring in an electrolytic solution to form an oxide film in the particle surface of the tungsten powder and removing the oxide film with an alkaline aqueous solution.

2. The method for finely powdering tungsten powder as claimed in claim 1, wherein the removal of the oxide film with an alkaline aqueous solution includes mechanically removing the reaction product in the particle surface of the tungsten powder.

3. The method for finely powdering tungsten powder as claimed in claim 1 or 2, wherein the electrolytic solution is an aqueous solution of mineral acid.

4. The method for finely powdering tungsten powder as claimed in claim 3, wherein the mineral acid is selected from phosphoric acid, nitric acid, hydrochloric acid, boric acid and sulfuric acid.

5. The method for finely powdering tungsten powder as claimed in claim 4, wherein the mineral acid is phosphoric acid or boric acid.

6. A method for finely powdering tungsten powder, comprising dispersing tungsten powder in an aqueous solution containing an oxidizing agent to form an oxide film in the surface of the tungsten powder, removing the oxide film with an alkaline aqueous solution, followed by the method claimed in any one of claims 1 to 5.

7. A method for producing fine tungsten powder, comprising obtaining tungsten powder having an average particle size of 0.04 to 0.4 $\mu$m by a process including the method claimed in any one of claims 1 to 6.

8. A method for producing fine tungsten powder, comprising obtaining tungsten powder, in which the product of an average particle size ($\mu$m), true density (g/cm$^3$) and BET specific surface area (m$^2$/g) is within the range of 6$\pm$0.4, by a process including the method claimed in any one of claims 1 to 6.

9. A tungsten powder having an average particle size of 0.04 to 0.4 $\mu$m, in which the dMS value (product of an average particle size d ($\mu$m), true density M (g/cm$^3$) and BET specific surface area S (m$^2$/g)) is within the range of 6$\pm$0.4.

# EP 2 786 819 A1

<table>
<tr><td colspan="2"><b>INTERNATIONAL SEARCH REPORT</b></td><td>International application No.<br>PCT/JP2012/071761</td></tr>
</table>

**A. CLASSIFICATION OF SUBJECT MATTER**
*B22F9/04*(2006.01)i, *B22F1/00*(2006.01)i, *H01G9/052*(2006.01)i

According to International Patent Classification (IPC) or to both national classification and IPC

**B. FIELDS SEARCHED**

Minimum documentation searched (classification system followed by classification symbols)
B22F9/04, B22F1/00, H01G9/052

Documentation searched other than minimum documentation to the extent that such documents are included in the fields searched
Jitsuyo Shinan Koho          1922–1996   Jitsuyo Shinan Toroku Koho   1996–2012
Kokai Jitsuyo Shinan Koho    1971–2012   Toroku Jitsuyo Shinan Koho   1994–2012

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2005-325448 A  (JFE Mineral Co., Ltd.), 24 November 2005 (24.11.2005), paragraphs [0001] to [0003] & WO 2005/099936 A1 | 1-9 |
| A | JP 2003-272959 A  (Sanyo Electric Co., Ltd.), 26 September 2003 (26.09.2003), entire text; all drawings (Family: none) | 1-9 |
| A | JP 2006-299385 A  (Noritake Co., Ltd.), 02 November 2006 (02.11.2006), paragraphs [0018] to [0019] (Family: none) | 1-9 |

☒ Further documents are listed in the continuation of Box C.    ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 18 September, 2012 (18.09.12) | 25 September, 2012 (25.09.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2012/071761

C (Continuation).   DOCUMENTS CONSIDERED TO BE RELEVANT

| Category* | Citation of document, with indication, where appropriate, of the relevant passages | Relevant to claim No. |
|---|---|---|
| A | JP 52-11752 A  (Tokyo Shibaura Electric Co., Ltd.), 28 January 1977 (28.01.1977), page 1, left column, lines 4 to 9 (Family: none) | 1-9 |
| P,A | WO 2012/086272 A1  (Showa Denko Kabushiki Kaisha), 28 June 2012 (28.06.2012), entire text; all drawings (Family: none) | 1-9 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004349658 A
- US 6876083 B2
- JP 2003272959 A

- WO 2004055843 A
- US 7154743 B2